# EUROPÄISCHE PATENTSCHRIFT

(11) **EP 1 256 017 B1**
(45) Veröffentlichungstag und Bekanntmachung des Hinweises auf die Patenterteilung: **10.01.2007**
(21) Anmeldenummer: 00991791.5
(22) Anmeldetag: 16.12.2000
(51) Int. Cl.: G01T 1/29

(54) **VORRICHTUNG UND VERFAHREN ZUM AUSLESEN VON IN EINER SPEICHERSCHICHT ABGESPEICHERTEN INFORMATIONEN SOWIE RÖNTGENKASSETTE**
DEVICE AND METHOD FOR READING OUT INFORMATION STORED IN A STORAGE LAYER, AND X-RAY CARTRIDGE
DISPOSITIF ET PROCEDE DE LECTURE DE DONNEES ENREGISTREES DANS UNE COUCHE MEMOIRE ET CASSETTE RADIOGRAPHIQUE

(30) Priorität: 23.12.1999 DE 19962774
(43) Veröffentlichungstag der Anmeldung: 13.11.2002
(73) Patentinhaber: Agfa-Gevaert HealthCare GmbH, 51373 Leverkusen (DE)
(72) Erfinder: GEBELE, Herbert, 82054 Sauerlach (DE); MÜLLER, Jürgen, 81545 München (DE); SCHALLER, Hans, 81929 München (DE); STAHL, Werner, 85551 Heimstetten (DE)
(86) Internationale Anmeldenummer: PCT/EP2000/012853
(87) Internationale Veröffentlichungsnummer: WO 2001/048513

(56) Entgegenhaltungen:
- EP-A- 0 288 014
- EP-A- 0 598 949
- US-A- 4 439 682
- US-A- 4 584 483
- US-A- 4 786 808
- US-A- 5 013 916

## Beschreibung

Die vorliegende Erfindung betrifft eine Vorrichtung und ein Verfahren zum Auslesen von in einer Speicherschicht abgespeicherten Informationen gemäß den Oberbegriffen der Ansprüche 1 und 19 sowie eine Röntgenkassette.

Insbesondere für medizinische Zwecke wird von einem Objekt, beispielsweise einem Patienten, mittels einer Röntgenstrahlung ein Bild erzeugt, das in einer Speicherschicht als latentes Bild abgespeichert wird. Als Speicherschicht wird dabei zumeist eine Phosphorschicht verwendet. Zum Auslesen des in der Speicherschicht abgespeicherten Röntgenstrahlenbildes wird die Speicherschicht mittels einer Strahlungsquelle angeregt. Sie emittiert daraufhin aufgrund dieser Anregung Licht, das eine Intensität entsprechend des abgespeicherten Röntgenstrahlungsbildes aufweist. Das von der Speicherschicht ausgesandte Licht wird von einem Empfangsmittel empfangen und anschließend in elektrische Signale gewandelt, so dass das in der Speicherschicht abgespeicherte Röntgenstrahlungsbild anschließend sichtbar gemacht werden kann. Das Röntgenstrahlungsbild kann beispielsweise direkt auf einem Monitor dargestellt oder auch auf einen speziell für Röntgenbilder verwendbaren fotografischen Röntgenfilm geschrieben werden. Nach dem Auslesen des Röntgenstrahlungsbildes aus der Speicherschicht wird diese von einer Löschvorrichtung gelöscht, um ein nachfolgendes Röntgenstrahlungsbild abspeichern zu können.

Solche Speicherschichten können in einer Röntgenkassette angeordnet sein. Aus der europäischen Patentschrift EP 0 288 014 B1 ist ein Löschen einer Speicherschicht bekannt, die sich in einer Röntgenkassette befindet. Die Röntgenkassette enthält einen Öffnungsmechanismus, so dass die Röntgenkassette zum Löschen von in der Speicherschicht abgespeicherten Informationen geöffnet werden kann. Außerhalb der Röntgenkassette ist ein Löschmittel vorhanden, das eine Löschstrahlung ausgibt. Diese Löschstrahlung wird in die geöffnete Röntgenkassette eingestrahlt und auf die Speicherschicht geworfen. Durch die Bestrahlung der Speicherschicht mittels der Löschstrahlung werden die in der Speicherschicht abgespeicherten Informationen gelöscht. Die bekannte Röntgenkassette enthält einen Reflektor oder ein Diffusionsmittel, um die in die Kassette eingestrahlte Löschstrahlung zu reflektieren und über die Breite der Speicherschicht zu streuen.

Eine Vorrichtung zum Auslesen von in einer Speicherschicht abgespeicherten Informationen ist aus der Patentschrift US 5,038,037 bekannt. Darin wird ein Röntgentisch zum Röntgen von Patienten beschrieben. Der Röntgentisch enthält zwei Phosphorschichten, die auf der Ober- und Unterseite eines Bandes angebracht sind und zum Abspeichern von Röntgeninformationen dienen. Sowohl für die auf der Oberseite als auch für die auf der Unterseite des Bandes angebrachte Phosphorschicht weist der bekannte Röntgentisch eine eigene Vorrichtung zum Auslesen von Informationen aus diesen Phosphorschichten auf. Des weiteren enthält der Röntgentisch zwei Löschmittel, die zum Löschen der Phosphorschichten verwendet werden. Für jede der Phosphorschichten ist ein eigenes Löschmittel vorgesehen. Als Löschmittel dient eine Löschlampe, die - in Transportrichtung des Bandes betrachtet - vor derjenigen Stelle angeordnet ist, an der das Röntgenstrahlungsbild von dem Patienten aufgenommen wird. Dadurch wird ein in der Phosphorschicht abgespeichertes "altes" Röntgenstrahlungsbild gelöscht, bevor ein "neues" Röntgenstrahlungsbild aufgenommen wird. Als Löschmittel werden ebenso mehrere nebeneinander angeordneten Löschlampen eingesetzt, die in dem Röntgentisch unterhalb derjenigen Position angeordnet sind, an der das Röntgenstrahlungsbild auf das stehende Band mit den Phosphorschichten projiziert wird. Vor der Aufnahme des "neuen" Röntgenstrahlungsbildes wird daher mit diesem Löschmittel bei stehendem Band zunächst das "alte" Röntgenstrahlungsbild gelöscht. Bei dieser Art von Löschmittel ist die Phosphorschicht für die "neue" Aufnahme nicht direkt verwendbar. Das Löschen der Phosphorschichten findet erst unmittelbar vor der folgenden Aufnahme eines "neuen" Röntgenstrahlungsbildes statt. Dies bedeutet einen Zeitverlust und eine Abstimmung zwischen Lösch- und nachfolgendem Abspeichervorgang. Die Löschung muß erst beendet sein, bevor die nächste Röntgenaufnahme beginnen kann.

Aus der Patentanmeldung WO 99/28765 ist eine Röntgenkassette bekannt, in der sowohl eine Vorrichtung zum Auslesen von in der Speicherschicht abgespeicherten Informationen als auch ein Löschmittel zum Löschen von in der Speicherschicht abgespeicherten Informationen vorhanden ist. Die Löschlampe erstreckt sich über die gesamte Breite der Speicherschicht, in der die Informationen abgespeichert werden können. Mittels eines Antriebes wird das Löschmittel entlang einer Transportrichtung, die senkrecht zur Zeilenrichtung verläuft, über die Speicherschicht geführt. Auf diese Weise kann die Speicherschicht zeilenweise gelöscht werden.

US 5,013,916 offenbart ein System zum Aufzeichnen und Auslesen von Informationen auf bzw. aus Speicherschichten mit einer primären und einer sekundären Löscheinheit, wobei die Menge des in der zweiten Löscheinheit erzeugten Löschlichts kleiner sein kann als die Menge des in der ersten Löscheinheit erzeugten Löschlichts.

US 4,786,808 beschreibt eine Vorrichtung zum Auslesen von Speicherschichten mit einer Löscheinheit und einer Steuereinheit zur Steuerung Löscheinheit und/oder der Bewegung der Speicherschicht relativ zur Löscheinheit, so dass die jeweils auf die Speicherschicht abgegebene Lichtmenge eingestellt werden kann.

Aus EP 0 598 949 A1 ist eine Vorrichtung zum Auslesen und Löschen von Speicherschichten bekannt, bei welcher die Intensität der Löschstrahlung von der jeweils abgespeicherten Information, insbesondere der maximalen Bestrahlungsintensität, abgeleitet wird.

Bei den bekannten Vorrichtungen bzw. Systemen und Verfahren nach dem Stand der Technik kann nicht in allen Anwendungsfällen ein einfaches und effektives Löschen von in einer Speicherschicht abgespeicherten Informationen und folglich eine qualitativ gute Wiedergabe der abgespeicherten Informationen gewährleistet werden.

Der vorliegenden Erfindung liegt die Aufgabe zugrunde, auf einfache und effektive Weise ein Löschen von in einer Speicherschicht abgespeicherten Informationen und eine qualitativ gute Wiedergabe von abgespeicherten Informationen zu ermöglichen.

Diese Aufgabe wird gemäß der technischen Lehren des Anspruchs 1, des Anspruchs 17 oder des Anspruchs 19 gelöst.

Aufgrund der erfindungsgemäßen Ausgestaltung ist es möglich, ein Entstehen von Geisterbildern in der Speicherschicht zu vermeiden oder zumindest zu reduzieren. Solche Geisterbilder können entstehen, wenn die erfindungsgemäße Vorrichtung oder die Röntgenkassette der Streustrahlung von anderen Röntgenaufnahmegeräten ausgesetzt ist, die sich beispielsweise in der Nähe befinden können. Solche Streustrahlungen können zwar im einzelnen sehr gering sein, durch Addition von Streustrahlungen mehrerer Röntgenaufnahmen anderer Röntgenaufnahmegeräte können sich allerdings sichtbare Geisterbilder in der Speicherschicht ansammeln. Darüber hinaus können herkömmliche Speicherschichten kleine Mengen von radioaktiven Isotopen, wie z. B. ²²⁶Ra, enthalten, die ebenfalls geringe Strahlungen emittieren. Diese werden noch ergänzt durch natürliche, kosmische Strahlungen. Insbesondere bei längerer Nichtbenutzung der Speicherschicht können diese Strahlungen zur Entstehung der Geisterbilder beitragen. Geisterbilder wirken sich schädlich auf die Qualität der Wiedergabe der ausgelesenen Informationen aus. Bei einem Auslesen von abgespeicherten Informationen können sich Geisterbilder als Rauschen bemerkbar machen. Aufgrund der Erfindung kann des Weiteren vorteilhafterweise gewährleistet werden, dass ein Abspeichern von "neuen" Informationen möglich ist, ohne zuvor unmittelbar vor dem Abspeichern ein Löschen vornehmen zu müssen. Ein Abstimmen des Löschvorganges auf den Abspeichervorgang ist nicht notwendig.

Vorteilhafterweise gibt das Löschmittel unmittelbar nach dem Auslesen von Informationen eines Bildes aus der Speicherschicht eine Löschstrahlung mit der größeren, ersten Intensität aus. Dadurch wird sichergestellt, dass die Speicherschicht recht schnell nach dem Abspeichern eines Bildes für das Aufnehmen eines neuen Bildes bereit ist.

Gemäß einem vorteilhaften Aspekt der Erfindung wird nach dem Ausgeben der Löschstrahlung mit der ersten Intensität die Löschstrahlung mit der zweiten, schwächeren Intensität ausgegeben. Dadurch wird ein unerwünschtes Abspeichern von auf die Speicherschicht treffender Streustrahlung verhindert, da diese Streustrahlung kontinuierlich von der Löschstrahlung gelöscht wird.

Gemäß einem besonders vorteilhaften Aspekt der Erfindung wird zwischen dem Auslesen der Informationen eines ersten Bildes und dem nachfolgenden Abspeichern von Informationen eines zweiten Bildes die Löschstrahlung auf die Speicherschicht ausgegeben. Dadurch wird ein Abspeichern von Streustrahlung und ein Entstehen von Geisterbildern während der gesamten Zeit zwischen dem Auslesen des ersten und dem Abspeichern der Informationen des zweiten Bildes vermieden. Die Qualität der Wiedergabe der Informationen verbessert sich dadurch weiter. Des Weiteren kann die Löschstrahlung mit der zweiten Intensität unabhängig von dem Abspeichern von Informationen eines neuen Bildes ausgegeben werden. Ein Abstimmen zwischen dem Abspeichern und dem Löschen mit der zweiten Intensität ist einfachheitshalber nicht erforderlich.

Vorteilhafterweise ist ein Detektionsmittel zum Detekieren derjenigen Strahlung vorhanden, mit der Informationen in der Speicherschicht abgespeichert werden. Dadurch kann ein automatisches Ausschalten des Löschmittels erfolgen, wenn ein Abspeichern von Informationen eines neuen Bildes beginnt. Einfachheitshalber kann das Detektionsmittel eine Fotodiode enthalten, vor der eine Wandlungsschicht zum Wandeln der Abspeicherstrahlung in eine Strahlung angebracht ist, die eine Wellenlänge aufweist, die durch die Fotodiode detektierbar ist.

Weitere vorteilhafte Ausgestaltungen der Erfindung können den abhängigen Ansprüchen entnommen werden.

Im folgenden werden die Erfindung und ihre Vorteile anhand von Ausführungsbeispielen beschrieben. Es zeigen:
- Fig. 1: ein erstes Ausführungsbeispiel einer erfindungsgemäßen Röntgenkassette mit einer flächig ausgestalteten Löschquelle,
- Fig. 2: eine Schnittdarstellung des ersten Ausführungsbeispiels der Röntgenkassette gemäß der Fig. 1,
- Fig. 3: ein zweites Ausführungsbeispiel einer erfindungsgemäßen Röntgenkassette mit einer seitlich am Röntgenkassettenrand angebrachten Löschquelle,
- Fig. 4: eine Schnittdarstellung des zweiten Ausführungsbeispiel der Röntgenkassette gemäß der Fig. 3,
- Fig. 5: ein Beispiel eines Röntgentisches, in dem ein drittes Ausführungsbeispiel einer erfindungsgemäßen Röntgenkassette angeordnet ist und
- Fig. 6: eine detaillierte Schemadarstellung des dritten Ausführungsbeispiels der Röntgenkassette mit einem Ausführungsbeispiel eines erfindungsgemäßen Lesekopfes.

Im folgenden werden für gleiche und gleich wirkende Elemente gleiche Bezugszeichen verwendet.

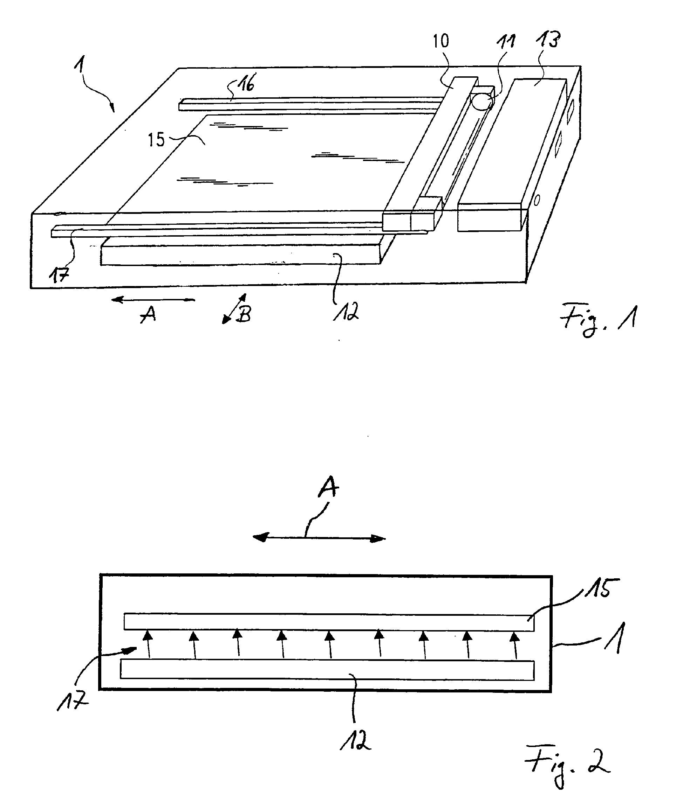

In den nachfolgend beschriebenen Ausführungsbeispielen der Figuren 1 bis 4 werden zum Löschen der Phosphorplatte 15 mittels der starken und der schwachen Löschstrahlung zwei Löschlampen 11 und 12 bzw. 14 verwendet. Erfindungsgemäß ist vorgesehen, anstelle von zwei Löschlampen eine einzige Löschlampe zu verwenden, die so ausgestaltet ist, dass sie sowohl die schwache als auch die starke Löschstrahlung ausgibt.

Die Figur 1 zeigt das erste Ausführungsbeispiel einer erfindungsgemäßen Röntgenkassette 1. Diese Röntgenkassette enthält eine Speicherschicht 15. Die Speicherschicht 15 ist hier eine Phosphorplatte. In der Phosphorplatte 15 können Röntgenstrahlungsbilder abgespeichert werden. Zum Auslesen der in der Phosphorplatte 15 abgespeicherten Röntgenstrahlungsbilder enthält die Röntgenkassette 1 einen Lesekopf 10. Entlang der Längsseiten der Phosphorplatte 15 sind zwei Führungsstäbe 16 und 17 angebracht, die zum Transportieren und zum Führen des Lesekopfes 10 dienen. Der Lesekopf 10 ist mittels eines nicht dargestellten Antriebes entlang der Führungsstäbe 16 und 17 in eine Vorschubrichtung A über die Oberfläche der Phosphorplatte 15 transportierbar. Links hinter dem Lesekopf 10 ist eine Löschlampe 11 angebracht. Die Löschlampe 11 ist mit dem Lesekopf 10 verbunden und kann, ebenso wie der Lesekopf 10, mittels des nicht dargestellten Antriebes entlang der Führungsstäbe 16 und 17 über die Oberfläche der Phosphorplatte 15 in die Vorschubrichtung A transportiert werden. Die Löschlampe 11 dient zum Löschen von in der Phosphorplatte abgespeicherten Informationen, die nach dem Auslesen eines Röntgenstrahlungsbildes mittels des Lesekopfes 10 noch in der Phosphorplatte 15 abgespeichert sind. Im Betrieb emittiert die Löschlampe 11 eine Löschstrahlung mit einer ersten Intensität. Diese erste Intensität ist vorteilhafterweise so groß, dass mit einem einmaligen Hin- und Herfahren der Löschlampe 11 über die Phosphorplatte 15 entlang der Richtung A in der Phosphorplatte 15 verbliebene Restinformationen des Röntgenstrahlungsbildes gelöscht werden. Nach dem Löschen der Phosphorplatte 15 mittels der Löschlampe 11 ist die Röntgenkassette für die Aufnahme eines nachfolgenden, zweiten Röntgenstrahlungsbildes bereit. Die Löschlampe 11 und der Lesekopf 10 erstrecken sich in eine Zeilenrichtung B über die gesamte Breite der Phosphorplatte 15. Die Zeilenrichtung B liegt senkrecht zur Vorschubrichtung A.

Innerhalb der Röntgenkassette 1 ist unter der Phosphorplatte 15 eine zweite Löschlampe 12 angeordnet. Diese zweite Löschlampe 12 ist flächig ausgestaltet. Die Fläche der zweiten Löschlampe 12 verläuft parallel zu derjenigen der Phosphorplatte 15. Die Ausdehnung der Fläche der zweiten Löschlampe 12 entspricht im wesentlichen derjenigen der Phosphorplatte 15, in der Röntgenstrahlungsbilder abgespeichert werden. Die von der zweiten Löschlampe 12 emittierte Löschstrahlung weist eine solche Wellenlänge auf, die innerhalb desjenigen Wellenlängenbereichs liegt, in dem die Phosphorplatte 15 stimuliert werden kann. Als eine solche flächig ausgestaltete zweite Löschlampe 12 kann beispielsweise der von der Firma Osram vertriebene Flächenstrahler "PLANON" verwendet werden.

Die Röntgenkassette 1 enthält des Weiteren ein Steuermittel 13, mit dem die in der Röntgenkassette 1 enthaltenen Komponenten angesteuert werden. Das Steuermittel 13 dient insbesondere zum Steuern der ersten Löschlampe 11 und der zweiten Löschlampe 12. Mittels des Steuermittels 13 sind die beiden Löschlampen 11 und 12 in einen An-Zustand, in dem sie Löschstrahlung ausgeben, und in einen Aus-Zustand schaltbar, in dem sie keine Löschstrahlung ausgeben. Die zweite Löschlampe 12 wird vorteilhafterweise von dem Steuermittel 13 unmittelbar nach dem Löschen der Phosphorplatte 15 durch die erste Löschlampe 11 in den An-Zustand geschaltet. Sie emittiert daraufhin kontinuierlich die Löschstrahlung mit der schwachen, zweiten Intensität. Die zweite Intensität ist vorteilhafterweise so schwach, dass ihr Beitrag zum Gesamtrauschen zu vernachlässigen ist. Für das Abspeichern eines neuen Röntgenstrahlenbildes in der Phosphorplatte 15 wird die zweite Löschlampe 12 von dem Steuermittel 13 in den Aus-Zustand geschaltet. Das neue Röntgenstrahlungsbild kann daher vollständig in der Phosphorplatte 15 abgespeichert werden, ohne dass auch nur geringste Teile Informationen bereits von der zweiten Löschlampe 12 gelöscht werden. Wie bereits oben beschrieben, wird anschließend das Röntgenstrahlungsbild mit dem Lesekopf 10 ausgelesen und die nach dem Auslesen weiterhin in der Phosphorplatte 15 abgespeicherten Restinformationen des Röntgenstrahlungsbildes mittels der ersten Löschlampe 11 gelöscht.

Es ist ebenso möglich, die zweite Löschlampe 12 auch während des Abspeicherns des neuen Röntgenstrahlungsbildes im An-Zustand zu belassen. In diesem Fall muß vorteilhafterweise keine Abstimmung zwischen der zweiten Löschlampe und der Strahlungsquelle erfolgen, die die Aufnahmestrahlung mit den abzuspeichernden Informationen in Richtung der Phosphorplatte 15 ausgibt. Die von der zweiten Löschlampe 12 ausgebbare Löschstrahlung kann so gestaltet werden, dass ein Ausschalten der zweiten Löschlampe 12 nicht mehr notwendig ist. Eine Einbindung und Abstimmung der Funktion der zweiten Löschlampe 12 in den Aufnahme-, Auslese- und Löschvorgang ist somit einfachheitshalber nicht notwendig.

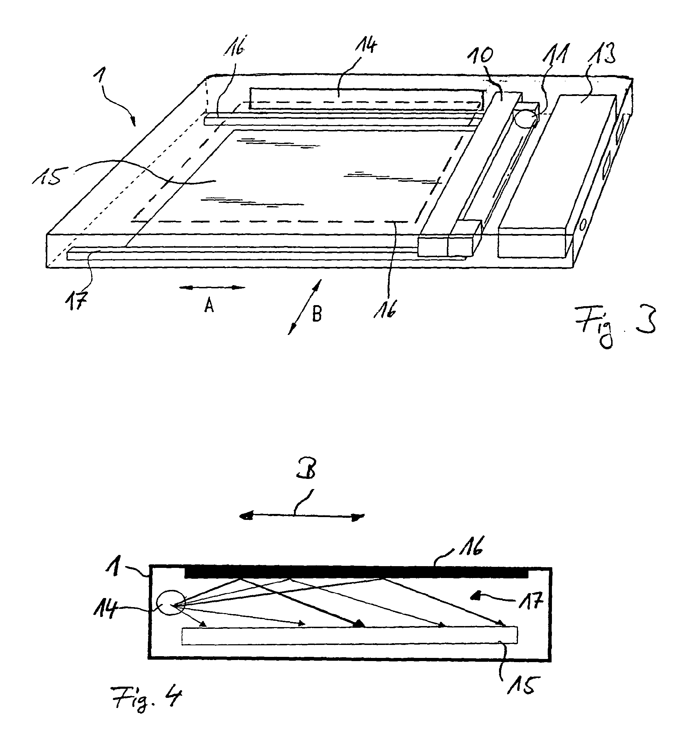

Figur 2 zeigt eine schematische Schnittdarstellung der Phosphorplatte 15 und des zweiten Löschmittels 12 gemäß der Figur 1. Die zweite Löschlampe 12 ist parallel zu der Phosphorplatte 15 innerhalb der Röntgenkassette 1 angeordnet. Die zweite Löschlampe 12 emittiert in Richtung der Phosphorplatte 15 eine Löschstrahlung 17, die die schwache, zweite Intensität hat.

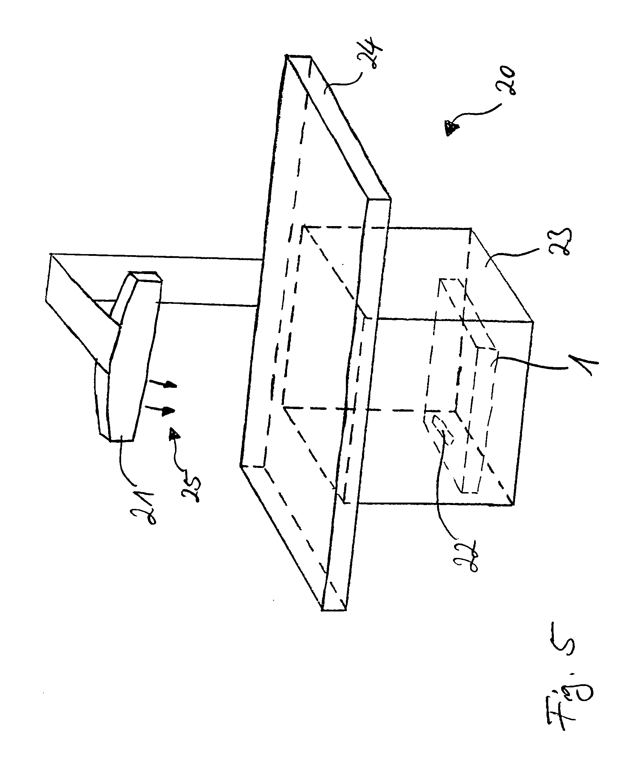

Figur 3 zeigt ein zweites Ausführungsbeispiel der erfindungsgemäßen Röntgenkassette 1. Anstelle der unterhalb der Phosphorplatte 15 angebrachten zweiten Löschlampe 12 (Figur 1) ist hier an der hinteren Seitenlängswand der Röntgenkassette 1 eine dritte Löschlampe 14 angeordnet. Diese dritte Löschlampe 14 befindet sich seitlich neben der Phosphorplatte 15 und erstreckt sich entlang deren Längsseite. An der Innenseite der oberen Abdeckung der Röntgenkassette 1 ist ein flächiger Reflektor 16 parallel zu der Phosphorplatte 15 angeordnet. Der Reflektor 16 kann beispielsweise ein Spiegel sein.

Die dritte Löschlampe 14 hat die gleiche Funktion wie die zweite Löschlampe 12 des ersten Ausführungsbeispiels gemäß der Figur 1. Sie emittiert Löschstrahlung mit der schwachen, zweiten Intensität. Diese schwache Löschstrahlung kann teilweise von der dritten Löschlampe 14 direkt auf die Phosphorplatte 15 gestrahlt oder aber von der dritten Löschlampe 14 auf den Reflektor 16 gerichtet und von diesem wiederum in Richtung der Phosphorplatte 15 reflektiert werden. Auf diese Weise wird die von der dritten Löschlampe 14 ausgegebene Löschstrahlung über die gesamte Fläche der Phosphorplatte 15 verteilt. Die gesamte Fläche der Phosphorplatte 15 wird aufgrund der Anordnungen der Löschlampe 14 und des Reflektors 16 von der zweiten Löschstrahlung 17 erreicht.

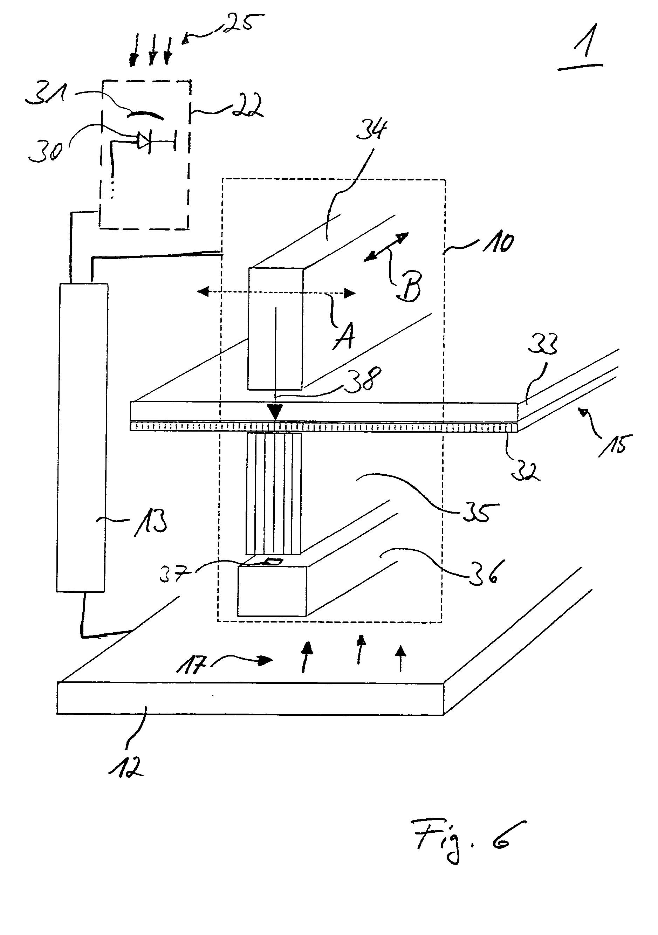

Figur 4 zeigt eine schematische Schnittdarstellung der Röntgenkassette 1 gemäß des zweiten Ausführungsbeispiels der Figur 3. Die Röntgenkassette 1 ist hier geschnitten in Zeilenrichtung B dargestellt. An der linken Seite der Figur 4 ist die dritte Löschlampe 14 angeordnet. Sie befindet sich seitlich zu dem Reflektor 16 und der Phosphorplatte 15 versetzt, in etwa in gleicher Entfernung von dem Reflektor 16 und der Phosphorplatte 15, innerhalb der Röntgenkassette 1.

Die Figur 5 zeigt ein Anwendungsbeispiel eines dritten Ausführungsbeispiels der erfindungsgemäßen Röntgenkassette 1. In diesem Anwendungsbeispiel ist die Röntgenkassette 1 in einem Röntgentisch 20 eingesetzt. Dieser Röntgentisch 20 enthält einen Röntgenfuß 23, in dem sich die Röntgenkassette 1 befindet, und eine auf diesem Röntgenfuß 23 angeordnete Auflagefläche 24. Auf diese Auflagefläche 24 werden zur Röntgenaufnahme Patienten gelegt. Über der Auflagefläche 24 und dem Röntgenfuß 23 mit der darin befindlichen Röntgenkassette 1 ist eine Röntgenquelle 21 an dem Röntgentisch 20 angebracht. Die Röntgenquelle 21 emittiert zur Aufnahme des Röntgenstrahlungsbildes eine Röntgenstrahlung 25 in Richtung der Auflagefläche 24. Die in dem Röntgenfuß 23 vorhandene Röntgenkassette 1 enthält hier ein Detektionsmittel 22, das als Sensor für die Röntgenstrahlung 25 dient. Mit dem Sensor 22 kann festgestellt werden, ob die Röntgenquelle 21 Röntgenstrahlung 25 emittiert. Mit Hilfe des Sensors 22 kann die Funktionstätigkeit der innerhalb der Röntgenkassette 1 enthaltenen Löschmittel gesteuert werden.

Zur weiteren Verdeutlichung der Funktion des Sensors 22 und zur Beschreibung des Lesekopfes 10 dient die Figur 6. Die Figur 6 zeigt den Lesekopf 10 und weitere in diesem Lesekopf 10 vorhandene Komponenten zum Auslesen der in der Phosphorplatte 15 abgespeicherten Röntgeninformationen. Der Lesekopf 10 enthält eine Laserdiodenzeile 34, die sich entlang der Zeilenrichtung B erstreckt. Die Laserdiodenzeile 34 dient zum Anregen eines Phosphormaterials 32, das auf ein transparentes Trägermaterial 33 aufgebracht ist und zusammen mit diesem Trägermaterial 33 die Phosphorplatte 15 bildet. Eine von der Laserdiodenzeile 34 ausgegebene Anregungsstrahlung 38 durchquert das Trägermaterial 33 und dringt in das Phosphormaterial 32 ein. Aufgrund dieser Anregung des Phosphormaterials 32 emittiert das Phosphormaterial 32 eine Emissionsstrahlung. Diese Emissionsstrahlung wird durch ein optisches Abbildungsmittel 35, das beispielsweise eine Vielzahl von Lichtwellenleitern enthält, auf eine CCD-Zeile 36 abgebildet. Die CCD-Zeile 36 enthält eine Vielzahl von zeilenförmig nebeneinander angeordneten lichtempfindlichen Flächen 37.

Die Figur 6 zeigt des Weiteren den Sensor 22 zum Detektieren von Röntgenstrahlung 25. Der Sensor 22 enthält eine Fotodiode 30, über der eine Scintillationsschicht 31 angeordnet ist. Die von der Röntgenquelle 21 emittierte Röntgenstrahlung 25 trifft auf diese Scintillationsschicht 31. Die Scintillationsschicht 31 führt eine Wellenlängenwandlung durch. Die Röntgenstrahlung 25 wird in eine Strahlung mit einer Wellenlänge gewandelt, die von der Fotodiode 30 detektiert werden kann. Der Sensor 22 ist mit dem Steuermittel 13 verbunden. Die von dem Sensor 22 ermittelte Information über die Ausgabe von Röntgenstrahlung 25 durch die Röntgenquelle 21 kann von dem Steuermittel 13 zum Ansteuern der zweiten Löschlampe 12 verwendet werden. Diese zweite Löschlampe 12 ist im Ausführungsbeispiel gemäß der Figur 6 unter der Phosphorplatte 15, wie bereits im Zusammenhang mit der Figur 1 beschrieben, angeordnet.

Befindet sich die zweite Löschlampe 12 in ihrem An-Zustand, so dass sie schwache Löschstrahlung 17 in Richtung der Phosphorplatte 15 ausgibt, so kann die zweite Löschlampe 12 durch das Steuermittel 13 dann in den Aus-Zustand geschaltet werden, wenn durch den Sensor 22 festgestellt wird, dass die Röntgenquelle 25 zur erneuten Abspeicherung eines Röntgenstrahlungsbildes in der Phosphorplatte 15 Röntgenstrahlung 25 emittiert. Auf diese Weise kann ein automatisches Ausschalten der zweiten Löschlampe 12 erfolgen, so dass während der Aufnahme eines neuen Röntgenstrahlungsbildes ein Löschen mit der zweiten Löschstrahlung 17 nicht erfolgt.

Anstelle der Fotodiode 30 und der Scintillationsschicht 31 kann der Sensor 22 auch anders ausgestaltet sein. Die Ausgestaltung mittels der Fotodiode 30 und der Scintillationsschicht 31 stellt eine besonders einfach zu realisierende Variante des Sensors 22 dar.

## Patentansprüche

1. Vorrichtung zum Auslesen von in einer Speicherschicht (15) abgespeicherten Informationen mit einem Löschmittel (11, 12, 14) zum Löschen von in der Speicherschicht (15) abgespeicherten Informationen mittels einer Löschstrahlung (17), wobei das Löschmittel (11, 12, 14) so ausgestaltet ist, dass die ausgebbare Löschstrahlung (17) eine erste und eine zweite Intensität annehmen kann, und die erste Intensität größer ist als die zweite Intensität, und das Löschmittel (11, 12, 14)
- eine einzige Löschlampe (11, 12 bzw. 14) umfasst, die so ausgestaltet ist, dass sie sowohl Löschstrahlung (17) mit der ersten Intensität als auch Löschstrahlung (17) mit der zweiten Intensität ausgeben kann, und
- ein Steuermittel (13) zum Ansteuern des Löschmittels (11, 12, 14) aufweist, so dass das Löschmittel (11, 12, 14) in einen An-Zustand, in dem die Löschstrahlung (17) mit der ersten bzw. zweiten Intensität auf die Speicherschicht (15) ausgegeben wird, und in einen Aus-Zustand, in dem keine Löschstrahlung (17) auf die Speicherschicht (15) ausgegeben wird, schaltbar ist,
**dadurch gekennzeichnet, dass** das Steuermittel (13) zum Ansteuern des Löschmittels (11, 12, 14) derart ausgebildet ist, dass
- das Löschmittel (11, 12, 14) zwischen dem Auslesen der Informationen eines in der Speicherschicht (15) abgespeicherten ersten Bildes und dem nachfolgenden Abspeichern von Informationen eines zweiten Bildes in der Speicherschicht (15) die Löschstrahlung (17) mit der ersten bzw. zweiten Intensität auf die Speicherschicht (15) ausgibt, und
- die Löschstrahlung (17) mit der ersten Intensität nach dem Auslesen von Informationen des ersten Bildes und die Löschstrahlung (17) mit der zweiten Intensität nach dem Ausgeben der Löschstrahlung (17) mit der ersten Intensität ausgegeben wird.

2. Vorrichtung nach Anspruch 1, **dadurch gekennzeichnet, dass** das Löschmittel (11, 12, 14) durch das Steuermittel (13) derart angesteuert wird, dass die Löschstrahlung (17) mit der ersten Intensität im wesentlichen unmittelbar nach dem Auslesen von Informationen des ersten Bildes ausgegeben wird.

3. Vorrichtung nach einem der vorhergehenden Ansprüche, **dadurch gekennzeichnet, dass** das Löschmittel (11, 12, 14) eine Löschlampe (11) umfasst, die über die Oberfläche der Speicherschicht (15) transportiert werden kann.

4. Vorrichtung nach Anspruch 3, **dadurch gekennzeichnet, dass** die erste Intensität der von der Löschlampe (11) emittierten Löschstrahlung (17) so groß ist, dass mit einem einmaligen Hin- und Herfahren der Löschlampe (11) über die Speicherschicht (15) in der Speicherschicht (15) verbliebene Informationen gelöscht werden.

5. Vorrichtung nach einem der Ansprüche 1 bis 2, **dadurch gekennzeichnet, dass** das Löschmittel (11, 12, 14) eine flächig ausgestaltete Löschquelle (12) aufweist, deren Fläche parallel zur Speicherschicht (15) angeordnet ist.

6. Vorrichtung nach Anspruch 5, **dadurch gekennzeichnet, dass** die Fläche zum Ausgeben der Löschstrahlung (17) wenigstens die Größe der Speicherschicht (15) hat.

7. Vorrichtung nach einem der Ansprüche 1 bis 2, **dadurch gekennzeichnet, dass** das Löschmittel (11, 12, 14) eine Löschquelle (14) aufweist, die seitlich neben der Speicherschicht (15) angeordnet ist.

8. Vorrichtung nach Anspruch 7, **dadurch gekennzeichnet, dass** sie einen Reflektor (16) zum Reflektieren der von der seitlich angeordneten Löschquelle (14) erzeugten Löschstrahlung (17) aufweist, und der Reflektor (16) so angeordnet ist, dass von ihm reflektierte Löschstrahlung (17) im Betrieb auf die Speicherschicht (15) gerichtet ist.

9. Vorrichtung nach einem der Ansprüche 1 bis 6, **gekennzeichnet durch** einen Lesekopf (10) zum Auslesen der in der Speicherschicht (15) abgespeicherten Informationen, wobei
- die Speicherschicht (15) ein transparentes Trägermaterial (33) mit einem darauf aufgebrachten Phosphormaterial (32) umfasst und
- der Lesekopf (10) ein Mittel (34) zum Anregen des Phosphormaterials (32) umfasst, wobei das Mittel (34) auf einer Seite der Speicherschicht (15) derart angeordnet ist, dass eine von dem Mittel (34) abgegebene Anregungsstrahlung (38) das Trägermaterial (33) durchquert, in das Phosphormaterial (32) eindringt und dieses zur Emission von Emissionsstrahlung anregt.

10. Vorrichtung nach Anspruch 9, **dadurch gekennzeichnet, dass** die Löschlampe (12) auf der dem Mittel (34) zum Anregen des Phosphormaterials (32) gegenüber liegenden Seite der Speicherschicht (15) angeordnet ist.

11. Vorrichtung nach Anspruch 9 oder 10, **gekennzeichnet durch** eine Vielzahl von zeilenförmig nebeneinander angeordneten lichtempfindlichen Flächen (37), welche auf der dem Mittel (34) zum Anregen des Phosphormaterials (32) gegenüber liegenden Seite der Speicherschicht (15) angeordnet sind.

12. Vorrichtung nach Anspruch 11, **dadurch gekennzeichnet, dass** eine CCD-Zeile (36) vorgesehen ist, welche die zeilenförmig nebeneinander angeordneten lichtempfindlichen Flächen (37) enthält.

13. Vorrichtung nach einem der Ansprüche 9 bis 12, **dadurch gekennzeichnet, dass** das Mittel (34) zum Anregen des Phosphormaterials (32) als Laserdiodenzeile ausgestaltet ist.

14. Vorrichtung nach einem der vorhergehenden Ansprüche, **dadurch gekennzeichnet, dass** sie ein Detektionsmittel (22) zum Detektieren einer Abspeicherungsstrahlung (25) aufweist, die zum Abspeichern der Informationen in der Speicherschicht (15) dient.

15. Vorrichtung nach Anspruch 1 und Anspruch 14, **dadurch gekennzeichnet, dass** das Detektionsmittel (22) mit dem Steuermittel (13) verbunden ist.

16. Vorrichtung nach Anspruch 14 oder 15, **dadurch gekennzeichnet, dass** das Detektionsmittel (22) eine Fotodiode (30) und eine Wandlungsschicht (31) zum Wandeln der Abspeicherungsstrahlung (25) in eine Strahlung aufweist, die von der Fotodiode (30) detektierbar ist.

17. Röntgenkassette mit einer Speicherschicht (15) zum Abspeichern von Informationen und einer Vorrichtung nach einem der vorhergehenden Ansprüche.

18. Röntgenkassette nach Anspruch 17, **dadurch gekennzeichnet, dass** die Speicherschicht (15) ein transparentes Trägermaterial (33) mit einem darauf aufgebrachten Phosphormaterial (32) umfasst.

19. Verfahren zum Auslesen von in einer Speicherschicht (15) abgespeicherten Informationen, wobei in der Speicherschicht (15) abgespeicherte Informationen mittels einer Löschstrahlung (17) gelöscht werden, welche eine erste und eine zweite Intensität annimmt, wobei die erste Intensität größer ist als die zweite Intensität und sowohl Löschstrahlung (17) mit der ersten Intensität als auch Löschstrahlung (17) mit der zweiten Intensität von einer einzigen Löschlampe (11, 12 bzw. 14) ausgegeben wird, wobei die Löschlampe (11, 12 bzw. 14) in einem An-Zustand die Löschstrahlung (17) mit der ersten bzw. zweiten Intensität und in einen Aus-Zustand keine Löschstrahlung (17) auf die Speicherschicht (15) ausgibt,
**dadurch gekennzeichnet, dass**
- die Löschstrahlung (17) mit der ersten bzw. zweiten Intensität auf die Speicherschicht (15) zwischen dem Auslesen der Informationen eines in der Speicherschicht (15) abgespeicherten ersten Bildes und dem nachfolgenden Abspeichern von Informationen eines zweiten Bildes in der Speicherschicht (15) ausgegeben wird, und
- die Löschstrahlung (17) mit der ersten Intensität nach dem Auslesen von Informationen des ersten Bildes und die Löschstrahlung (17) mit der zweiten Intensität nach dem Ausgeben der Löschstrahlung (17) mit der ersten Intensität ausgegeben wird.

## Claims

1. Device for reading out information stored in a storage layer (15), having an erasing means (11, 12, 14) for erasing information stored in the storage layer (15) by means of an erasure radiation (17), the erasing means (11, 12, 14) being configured in such a way that the erasure radiation (17) that can be output can take a first and a second intensity, the first intensity being greater than the second intensity, and the erasing means (11, 12, 14)
- comprising a single erasing lamp (11, 12 or 14) configured in such a way that it can output both erasure radiation (17) of the first intensity and erasure radiation (17) of the second intensity, and
- exhibiting a control means (13) for controlling the erasing means (11, 12, 14) in such a way that the erasing means (11, 12, 14) can be switched into an on state in which the erasure radiation (17) of the first or second intensity is output onto the storage layer (15), and into an off state in which no erasure radiation (17) is output onto the storage layer (15),
**characterised in that** the control means (13) for controlling the erasing means (11, 12, 14) is designed in such a way that
- the erasing means (11, 12, 14) outputs the erasure radiation (17) of the first or of the second intensity onto the storage layer (15) between the reading out of information of a first image stored in the storage layer (15) and the subsequent storage of information of a second image in the storage layer (15), and
- the erasure radiation (17) of the first intensity is output after the reading out of information of the first image and the erasure radiation (17) of the second intensity is output after the output of the erasure radiation (17) of the first intensity.

2. Device according to claim 1, wherein the erasing means (11, 12, 14) is controlled by the control means (13) in such a way that the erasure radiation (17) of the first intensity is output essentially immediately after the reading out of information of the first image.

3. Device according to any of the preceding claims, wherein the erasing means (11, 12, 14) comprises an erasing lamp (11) which can be transported over the surface of the storage layer (15).

4. Device according to claim 3, wherein the first intensity of the erasure radiation (17) emitted by the erasing lamp (11) is so high that residual information remaining in the storage layer (15) can be erased by a single to and fro movement of the erasing lamp (11) over the storage layer (15).

5. Device according to any of claims 1 to 2, wherein the erasing means (11, 12, 14) exhibits an erasing source (12) of planar configuration the surface of which is arranged parallel to the storage layer (15).

6. Device according to claim 5, wherein the surface for outputting the erasure radiation (17) has at least the size of the storage layer (15).

7. Device according to any of claims 1 to 2, wherein the erasing means (11, 12, 14) exhibits an erasing source (14) which is laterally arranged next to the storage layer (15).

8. Device according to claim 7, wherein it exhibits a reflector (16) for reflecting the erasure radiation (17) produced by the laterally arranged erasing source (14) and wherein the reflector (16) is arranged such that erasure radiation (17) reflected by it is directed onto the storage layer (15) during operation.

9. Device according to any of claims 1 to 6, **characterised by** a reading head (10) for reading out information stored in the storage layer (15), wherein
- the storage layer (15) comprises a transparent substrate material (33) having a phosphor material (32) applied thereto and
- the reading head (10) comprises a means (34) for stimulating the phosphor material (32), said means (34) being arranged on one side of the storage layer (15) in such a way that a stimulating radiation (38) output by said means (34) traverses the substrate material (33), penetrates into the phosphor material (32) and stimulates it in order to emit emission radiation.

10. Device according to claim 9, wherein the erasing lamp (12) is arranged on the side of the storage layer (15) opposite to said means (34) for stimulating the phosphor material (32).

11. Device according to claim 9 or 10, **characterised by** a plurality of light-sensitive surfaces (37) arranged in a row next to one another which are arranged on the side of the storage layer (15) opposite to said means (34) for stimulating the phosphor material (32).

12. Device according to claim 11, wherein a CCD row (36) is provided which contains the light-sensitive surfaces (37) arranged in a row next to one another.

13. Device according to any of claims 9 to 12, wherein said means (34) for stimulating the phosphor material (32) is configured as laser diode row.

14. Device according to any of the preceding claims, wherein it exhibits a detection means (22) for detecting a storage radiation (25) which serves for storing the information in the storage layer (15).

15. Device according to claim 1 and claim 14, wherein the detection means (22) is connected with the control means (13).

16. Device according to claim 14 or 15, wherein the detection means (22) exhibits a photodiode (30) and a conversion layer (31) for converting the storage radiation (25) into a radiation which can be detected by the photodiode (30).

17. X-ray cassette having a storage layer (15) for storing information and a device according to any of the preceding claims.

18. X-ray cassette according to claim 17, wherein the storage layer (15) comprises a transparent substrate material (33) with a phosphor material (32) applied thereto.

19. Process for reading out information stored in a storage layer (15), information stored in the storage layer (15) being erased by means of an erasure radiation (17) which takes a first and a second intensity, the first intensity being greater than the second intensity and both erasure radiation (17) of the first intensity and erasure radiation (17) of the second intensity being output by a single erasing lamp (11, 12 or 14), the erasing lamp (11, 12 or 14) outputting the erasure radiation (17) of the first or of the second intensity in an on state and outputting no erasure radiation (17) onto the storage layer (15) in an off state,
**characterised in that**
- the erasure radiation (17) of the first or of the second intensity is output onto the storage layer (15) between the reading out of the information of a first image stored in the storage layer (15) and the subsequent storage of information of a second image in the storage layer (15), and
- the erasure radiation (17) of the first intensity is output after the reading out of information of the first image and the erasure radiation (17) of the second intensity is output after the output of the erasure radiation (17) of the first intensity.

## Revendications

1. Dispositif pour la lecture d'informations stockées dans une couche mémoire (15) comprenant un moyen d'effacement (11, 12, 14) pour l'effacement d'informations stockées dans la couche mémoire (15) au moyen d'un rayonnement d'effacement (17), le moyen d'effacement (11, 12, 14) étant conçu de telle sorte que le rayonnement d'effacement (17) pouvant être délivré peut prendre une première et une seconde intensité, et la première intensité est supérieure à la seconde intensité, et le moyen d'effacement (11, 12, 14)
- comprend une lampe d'effacement unique (11, 12 ou 14), qui est conçue de telle sorte qu'elle peut émettre aussi bien du rayonnement d'effacement (17) avec la première intensité que du rayonnement d'effacement (17) avec la seconde intensité, et
- présente un moyen de commande (13) pour l'activation du moyen d'effacement (11, 12 14), de telle sorte que le moyen d'effacement (11, 12, 14) peut être commuté dans un état d'activation, dans lequel le rayonnement d'effacement (17) est délivré avec la première ou la seconde intensité sur la couche mémoire (15), et dans un état d'arrêt, dans lequel aucun rayonnement d'effacement (17) n'est délivré sur la couche mémoire (15),
**caractérisé en ce que** le moyen de commande (13) pour l'activation du moyen d'effacement (11, 12, 14) est réalisé de telle sorte que
- le moyen d'effacement (11, 12, 14) délivre le rayonnement d'effacement (17) avec la première ou la seconde intensité sur la couche mémoire (15) entre la lecture des informations d'une première image stockée dans la couche mémoire (15) et le stockage consécutif d'informations d'une seconde image dans la couche mémoire (15), et
- le rayonnement d'effacement (17) est délivré avec la première intensité après la lecture d'informations de la première image et le rayonnement d'effacement (17) avec la seconde intensité après la délivrance du rayonnement d'effacement (17) avec la première intensité.

2. Dispositif selon la revendication 1, **caractérisé en ce que** le moyen d'effacement (11, 12, 14) est activé par le moyen de commande (13) de telle sorte que le rayonnement d'effacement (17) est délivré avec la première intensité sensiblement directement après la lecture d'informations de la première image.

3. Dispositif selon l'une quelconque des revendications précédentes, **caractérisé en ce que** le moyen d'effacement (11, 12, 14) comprend une lampe d'effacement (11) qui peut être transportée sur la surface de la couche mémoire (15).

4. Dispositif selon la revendication 3, **caractérisé en ce que** la première intensité du rayonnement d'effacement (17) émis par la lampe d'effacement (11) est si grande que, avec un aller et retour unique de la lampe d'effacement (11) sur la couche mémoire (15), des informations restées dans la couche mémoire (15) sont effacées.

5. Dispositif selon l'une quelconque des revendications 1 à 2, **caractérisé en ce que** le moyen d'effacement (11, 12, 14) présente une source d'effacement (12) conçue à plat, dont la surface est disposée parallèlement à la couche mémoire (15).

6. Dispositif selon la revendication 5, **caractérisé en ce que** la surface pour la délivrance du rayonnement d'effacement (17) a au moins la grandeur de la couche mémoire (15).

7. Dispositif selon l'une quelconque des revendications 1 à 2, **caractérisé en ce que** le moyen d'effacement (11, 12, 14) présente une source d'effacement (14) qui est disposée sur le côté à côté de la couche mémoire (15).

8. Dispositif selon la revendication 7, **caractérisé en ce qu'**il présente un réflecteur (16) pour la réflexion du rayonnement d'effacement généré par la source d'effacement (14) disposée sur le côté, et le réflecteur (16) est disposé de telle sorte que le rayonnement d'effacement (17) réfléchi par le réflecteur est dirigé pendant le service sur la couche mémoire (15).

9. Dispositif selon l'une quelconque des revendications 1 à 6, **caractérisé par** une tête de lecture (10) pour la lecture des informations mémorisées dans la couche mémoire (15),
- la couche mémoire (15) comprenant un matériau support (33) transparent avec un matériau de phosphore (32) appliqué dessus et
- la tête de lecture (10) comprend un moyen (34) pour l'excitation du matériau de phosphore (32), le moyen (34) étant disposé sur un côté de la couche mémoire (15) de telle sorte qu'un rayonnement d'excitation (38) émis par le moyen (34) traverse le matériau support (33), pénètre dans le matériau de phosphore (32) et excite ce matériau pour l'émission de rayonnement d'émission.

10. Dispositif selon la revendication 9, **caractérisé en ce que** la lampe d'effacement (12) est disposée sur le côté, opposé au moyen (34) pour l'excitation du matériau de phosphore (32), de la couche mémoire (15).

11. Dispositif selon la revendication 9 ou 10, **caractérisé par** une pluralité de surfaces (37), sensibles à la lumière, disposées les unes à côté des autres en forme de lignes, qui sont disposées sur le côté, opposé au moyen (34) pour l'excitation du matériau de phosphore (32), de la couche mémoire (15).

12. Dispositif selon la revendication 11, **caractérisé en ce qu'**il est prévu une ligne CCD (36) qui contient les surfaces (37) sensibles à la lumière et disposées les unes à côté des autres en forme de lignes.

13. Dispositif selon l'une quelconque des revendications 9 à 12, **caractérisé en ce que** le moyen (34) pour l'excitation du matériau de phosphore (32) est conçu comme une ligne de diodes laser.

14. Dispositif selon l'une quelconque des revendications précédentes, **caractérisé en ce qu'**il présente un moyen de détection (22) pour la détection d'un rayonnement de stockage (25), qui sert au stockage des informations dans la couche mémoire (15).

15. Dispositif selon la revendication 1 et la revendication 14, **caractérisé en ce que** le moyen de détection est relié au moyen de commande (13).

16. Dispositif selon la revendication 14 ou 15, **caractérisé en ce que** le moyen de détection (22) présente une photodiode (30) et une couche de conversion (31) pour la conversion du rayonnement de stockage (25) en un rayonnement qui peut être détecté par la photodiode (30).

17. Cassette radiographique comprenant une couche mémoire (15) pour le stockage d'informations et un dispositif selon l'une quelconque des revendications précédentes.

18. Cassette radiographique selon la revendication 17, **caractérisée en ce que** la couche mémoire (15) comprend un matériau support (33) transparent avec un matériau de phosphore (32) appliqué dessus.

19. Procédé de lecture d'informations stockées dans une couche mémoire (15), des informations stockées dans la couche mémoire (15) étant effacées avec un rayonnement d'effacement (17) qui prend une première et une seconde intensité, la première intensité étant supérieure à la seconde intensité et aussi bien le rayonnement d'effacement (17) avec la première intensité que le rayonnement d'effacement (17) avec la seconde intensité étant délivrés par une unique lampe d'effacement (11, 12 ou 14), la lampe d'effacement (11, 12 ou 14) délivrant dans un état d'activation le rayonnement d'effacement (17) avec la première ou la seconde intensité et ne délivrant dans un état d'arrêt aucun rayonnement d'effacement (17) sur la couche mémoire (15),
**caractérisé en ce que**
- le rayonnement d'effacement (17) est délivré avec la première ou la seconde intensité sur la couche mémoire (15) entre la lecture des informations d'une première image stockée dans la couche mémoire (15) et le stockage consécutif d'informations d'une seconde image dans la couche mémoire (15), et
- le rayonnement d'effacement (17) est délivré avec la première intensité après la lecture d'informations de la première image et le rayonnement d'effacement (17) avec la seconde intensité après la délivrance du rayonnement d'effacement (17) avec la première intensité.
